# EUROPÄISCHE PATENTSCHRIFT

(11) **EP 1 686 105 B1**
(45) Veröffentlichungstag und Bekanntmachung des Hinweises auf die Patenterteilung: **05.09.2007**
(21) Anmeldenummer: 06100886.8
(22) Anmeldetag: 26.01.2006
(51) Int. Cl.: C04B 35/10, C04B 35/14

(54) **Verfahren zum Herstellen feuerfester Feuerleichtsteine**
Process for the production of lightweight refractory bricks
Procèdé pour la prduction des briques légères refractaires

(30) Priorität: 27.01.2005 AT 432005 U
(43) Veröffentlichungstag der Anmeldung: 02.08.2006
(73) Patentinhaber: Styrokeram GmbH Gesellschaft für feuerfeste Erzeugnisse, 8700 Leoben (AT)
(72) Erfinder: Stroißnigg, Uwe, 8714 Kraubath (AT)
(74) Vertreter: Henhapel, Bernhard

(56) Entgegenhaltungen:
- DE-A1- 2 430 914
- DE-A1- 4 326 615
- D.GES. FEUERFEST- UND SCHORNSTEINBAU E.V: "Feuerfestbau; 2. Auflage" 1994, VULKAN VERLAG , ESSEN , XP002379856 Seiten 33, 34 (Absatz 2.3.2.1); Tabelle 11 - Seite 32
- DATABASE COMPENDEX [Online] ENGINEERING INFORMATION, INC., NEW YORK, NY, US; MUKHIN AA ET AL: "Using production scrap from alumina insulating refractories" XP002379858 Database accession no. EIX72090001687 & OGNEUPORY AUG 1971, Nr. 8, August 1971 (1971-08), Seiten 20-3.,

## Beschreibung

Die vorliegenden Erfindung bezieht sich auf ein Verfahren zum Herstellen feuerfester Feuerleichtsteine, bei welchem als Ausgangsprodukt entweder bei der Herstellung von Feuerleichtsteinen mittels Schleifen, anfallender Schleifstaub oder beim Vermahlen von bereits benutzten Feuerleichtsteinen oder Feuerleichtsteinausschußware entstandener Mahlstaub zum Einsatz kommt und der dabei anfallende Schleif- bzw. Mahlstaubstaub mit einem an sich bekannten Bindemittel vermischt, anschließend in einer Formpresse gepresst und danach einem Trocknungs- oder Brennvorgang bei einer Temperatur höher als 85°C ausgesetzt wird.

Feuerleichtsteine finden weltweit im Bereich der Feuerfesttechnologie Anwendung. Sie dienen als Isoliermaterial im Hochtemperaturbereich und kommen vorwiegend in Böden, Decken oder Hintermauerungen zum Einsatz. Ein großes Anwendungsgebiet ist das Ausmauern von Brennkammern und Öfen um die Abstrahlung der Hitze nach außen zu reduzieren.

Feuerleichtsteine sind geformte, feuerfeste Erzeugnisse mit einer Gesamtporosität > 45 % und einer Anwendungstemperatur von mindestens 800 °C. Ausgehend vom Chemismus sind Feuerleichtsteine in aluminiumsilikatische Feuerleichtsteine, Silikatleichtsteine, Zirkonleichtsteine und Korundleichtsteine zu unterteilen. Die größte Bedeutung und Verbreitung kommt den Aluminiumsilikatleichtsteinen (Schamotte- und Mullitsteine) zu. Zur Herstellung werden Rohstoffe auf der Basis von Al₂O₃, SiO₂ und eventuell CaO verwendet. Als Tonerdeträger werden Rohstoffe wie Ton, Kaolin, Schamotte, Sillimanit, Andalusit, Kyanit und Mullit sowie Tonerde, Tonerdehydrat und Korund eingesetzt. Neben den feinkörnigen Rohstoffen kommen auch grobkörnige, poröse Rohstoffe wie Leichtschamotte und Hohlkugeln aus Korund und Mullit zur Anwendung.

Neben der Herstellung von Normalformaten in Großserie kommt es auch zu Maßanfertigungen auf Kundenwunsch. Feuerleichtsteine zeichnen sich neben einem geringen Gewicht auch durch eine geringe Wärmeleitfähigkeit aus. Sie weisen des weiteren ausreichende mechanische Festigkeit, aber ebenfalls gute Bearbeitbarkeit auf. Weitere Eigenschaften sind die hohe thermische Beständigkeit unter vielfältigen atmosphärischen Bedingungen sowie Beständigkeit gegenüber Temperaturschocks und -wechseln.

Als Maß für die maximale Anwendungstemperatur gilt die sogenannte Klassifikationstemperatur. Die Klassifikationstemperatur als Herstellerinformation wird üblicherweise an halben Normalsteinen im Labor bestimmt, wobei die Schwindung bei allseitiger Temperaturbeaufschlagung nach 24h maximal 2% sein darf.

Das bekannteste und am häufigsten eingesetzte Verfahren zur Herstellung von Feuerleichtsteinen ist das Ausbrennverfahren. Als Ausbrennstoffe dienen fein gemahlenes Sägemehl, Petrolkoks, Braunkohleabrieb, Styroporkugeln sowie feine Abfallprodukte der Zellulose- und Kartonageindustrie. Dabei werden möglichst aschearme Ausbrennstoffe benötigt, um die Heißeigenschaften nicht negativ zu beeinflussen.

Feuerfeste Tone mit einem Al₂O₃ Anteil von mehr als 32Gew% werden mit einem der Ausbrennstoffen, beispielsweise Sägemehl und Wasser solange gemischt bis eine plastische Masse entsteht. Die Masse wird dann mindestens 24 Stunden gelagert, um gleichmäßige Feuchtigkeit in der gesamten Mischung zu erreichen. Nach der Lagerung wird die entstandene plastische Masse beispielsweise über eine Vakuumstrangpresse gezogen und als Formlinge zum Trocknen bereitgestellt. Die Formlinge werden danach einem ca. drei Tage andauernden Trocknungsprozess unterzogen und anschließen in einem Ofen ca. 48 Stunden gebrannt, wobei die Temperatur im Ofen zwischen 1200°C und 1400°C beträgt. Nach dem Brand werden die, teilweise durch den Brand verbogenen Steine auf Paletten abgelegt und für die Schleiferei bereitgestellt, wo die Steine entweder auf das entsprechende Normalformat geschliffen werden oder aber spezielle Formate auf Kundenwunsch hergestellt werden. Die Schleifzugabe von einem geschliffenen Stein zu einem gebrannten Stein beträgt ca. 30%, dh. dass der gebrannte Stein um ca. 30% größer sein muss als das eigentliche Endprodukt nach dem Schleifen.

Mit anderen Worten fällt beim Schleifvorgang eines Feuerleichtsteins ca. 30% des Feuerleichtstein als Schleifstaub an, der bislang nur teilweise wieder der Produktion zugeführt werden konnte. Als Grenze für die Wiederverwendbarkeit ist die Bearbeitbarkeit anzusehen. Mit zunehmender Wiederverwendung des Schleifstaubes im normalen Produktionsprozess verlieren die auf diese Art und Weise hergestellten Feuerleichtsteine ihre Elastizität, wodurch die Herstellung mittels Ziehen in einer Strangpresse nicht mehr möglich ist. Somit fällt aber ein Großteil des Schleifstaubes als Abfallprodukt an, das kostenintensiv entsorgt werden muss.

Aber auch beim Abbau von beispielsweise Hochöfen oder anderen Produkten, in welchen bereits benutzte Feuerleichtsteine zum Einsatz gekommen sind, ist bislang eine kostenintensive Entsorgung der Feuerleichtsteine erforderlich gewesen.

Ebenso bei der Entsorgung von Ausschussware, die im Wege des herkömmliche Produktionsprozess nach dem Ausbrennverfahren entstanden ist.

Ziel der Erfindung ist es daher, den bei der herkömmlichen Herstellung mittels Ausbrennverfahren anfallenden Schleifstaub sowie bereits benutzte Feuerleichtsteine bzw. Ausschussware wiederzuverwerten.

Erfindungsgemäß wird dies durch die kennzeichnenden Merkmale des Anspruchs 1 erreicht.

Durch die Vermischung des anfallenden Schleifstaubes/Mahlstaubs von auf herkömmliche Art und Weise mittels Ausbrennverfahren und anschließendem Schleifen hergestellten Feuerleichtsteinen mit einem Bindemittel und anschließendem Pressen mittels Formpresse auf Maß sowie darauffolgendem Trocknen bei einer Temperatur höher als 85°C, kann der anfallende Schleifstaub zur Gänze für die Herstellung von weiterenneuen Feuerleichtsteinen wiederverwertet werden. Die bislang erforderliche Entsorgung entfällt. Ein weiterer Vorteil des erfindungsgemäßen Verfahrens ist die Tatsache, dass damit auch bereits in Gebrauch befindliche Feuerleichtsteine wiederverwertet werden können. Sie müssen lediglich beispielsweise aus einem Ofen ausgebaut, vermahlen und mit dem erfindungsgemäßen Verfahren wieder zu neuen Feuerleichtsteinen, möglicherweise mit anderen Abmessungen verarbeitet werden.

Der erfindungsgemäße Einsatz von Schleifstaub/Mahlstaub als Ausgangsprodukt bietet weiters den Vorteil, dass das Ausgangsprodukt schon totgebrannt ist, wie es in der Fachsprache heißt. Mit anderen Worten würde ein neuerliches Brennen die Eigenschaften des Ausgangsproduktes nicht mehr verändern, weswegen ein neuerliches, 48 stündiges Brennen bei Temperaturen zwischen 1200°C und 1400°C obsolet ist und ein Trocknen bei wesentlich geringeren Temperaturen für einen wesentlich geringeren Zeitraum ausreichend ist, um bei einem mittels erfindungsgemäßen Verfahren hergestellten Feuerleichtsein eine Klassifikationstemperatur von 1300°C zu erreichen. Erst wenn eine Klassifikationstemperatur von 1450°C erreicht werden soll, ist ein neuerliches Brennen erforderlich, jedoch lediglich bei einer Temperatur zwischen 500°C und 600°C und lediglich für 24 Stunden. In beiden Fällen ist das neue und erfindungsgemäße Verfahren gegenüber den bekannten Verfahren daher mit einem drastisch geringeren Energieverbrauch und einer wesentlich geringeren Produktionszeit verbunden.

Um das erfindungsgemäße Verfahren optimal durchführen zu können und die Herstellung von neuen Feuerleichtsteinen mit einer in der Praxis erforderlichen Klassifikationstemperatur von 1300°C bzw. 1450°C zu ermöglichen, ist es erforderlich, dass der Schleifstaub/Mahlstaub eine bestimmte Zusammensetzung aufweist, nämlich gemäß den kennzeichnenden Merkmalen des Anspruchs 2 30-77 Gew% Al₂O₃, 21-65 Gew% SiO₂ und 0,7-2,05% Fe₂O₃. Über die Mengenbeigabe dieser Stoffe kann die Feuerfestigkeit des entstehenden Feuerleichtsteins eingestellt werden. Im vorliegenden Fall ist die Zusammensetzung des Schleifstaubs/Mahlstaubs jedoch bereits durch die Zusammensetzung des abgeschliffenen Feuerleichtsteins bzw. der vermahlenen bereits gebrauchten Feuerleichtsteine oder Feuerleichtsteinausschussware vorgegeben. Gemäß den kennzeichnenden Merkmalen des Anspruchs 2 enthält der Schleifstaub/Mahlstaub weiters auch Zusatzstoffe.

Bei den Zusatzstoffen handelt es sich gemäß den kennzeichnenden Merkmalen des Anspruchs 3 um 0,36-0,82 Gew% TiO₂, 0,06-0,24 Gew% CaO, 0,05-0,53 MgO, 0,13-0,33 Gew% Na₂O, 0,34-3,01 Gew% K₂0 und 0,02-02 Gew% P₂O₅. Die Zusatzstoffe ergeben sich aus den natürlichen Vorkommen in den Rohstoffen des Ursprungproduktes, deren Prozentsatz im Schleifstaub/Mahlstaub ergibt sich daher ebenfalls aufgrund der Zusammensetzung des Ursprungproduktes.

Gemäß dem kennzeichnenden Merkmal des Anspruchs 4 wird als Bindemittel Wasserglas eingesetzt, was einen 22 bis 26 stündigen, vorzugsweise 24 stündigen Trocknungsvorgang der bereits gepressten Feuerleichtsteine bei einer Temperatur zwischen 85°C und 135°C, vorzugsweise zwischen 95°C und 120°C erfordert. Bei Einsatz dieses Bindemittels sind bei einem nach dem erfindungsgemäßen Verfahren hergestellten Feuerleichtstein Klassifikationstemperaturen von 1300°C erreichbar.

Die kennzeichnenden Merkmale des Anspruchs 5 sehen als Bindemittel Aluminiumphosphat (AlPO₄), vorzugsweise Monoaluminiumphosphat vor. In diesem Fall ist anstelle eines Trocknungsvorganges ein 22 bis 26 stündiger, vorzugsweise 24 stündiger Brennvorgang des bereits gepressten Feuerleichtsteins bei einer Temperatur zwischen 500°C und 600°C erforderlich. Bei Einsatz dieses Bindemittels sind bei einem nach dem erfindungsgemäßen Verfahren hergestellten Feuerleichtstein Klassifikationstemperaturen von 1450°C erreichbar.

Die kennzeichnenden Merkmale des Anspruchs 6 sehen als Bindemittel eine wässrige Lösung kolloider Kieselsäure (H₂SiO₃) vor. Die Anforderungen bezüglich der Dauer des Trocknungsvorganges und der Temperatur, bei welcher der Trocknungsvorgang stattfindet entsprechen jenen beim Einsatz von Aluminiumphosphat als Bindemittel.

Der anschließende Pressvorgang findet gemäß den kennzeichnenden Merkmalen des Anspruchs 7 vorzugsweise in hydraulischen Formpressen statt.

Gemäß den kennzeichnenden Merkmalen des Anspruchs 8 werden dem Schleifstaub/Mahlstaub vor oder während des Vermischens mit dem Bindemittel Mikroholkugeln zugesetzt, um das Gewicht des gepressten Steines zu verringern. Gängige Mikroholkugeln sind beispielsweise Cenospheres©, E-Spheres© oder Fillite© und sind mit einer Korngröße von max. 0,5 mm lieferbar. Sie weisen eine feste, undurchlässige Wand auf und können mit unterschiedlichen Stoffen gefüllt sein.

Die Verwendung von Schleifstaub/Mahlstaub mit einer durchschnittlichen Partikelgröße von höchstens 2mm ermöglicht die Herstellung von Feuerleichtbausteinen mit sehr hoher Festigkeit.

Die Anwendung eines erfindungsgemäßen Verfahrens zur Herstellung eines Feuerleichtbausteins erfolgt daher wie folgt:

### Ausführungsbeispiel 1

Schleifstaub der bei der konventionellen Herstellung von Feuerleichtbausteinen, beispielsweise mittels Ziehen durch eine Strangpresse und anschließendem Schleifen entstanden ist bzw. Mahlstaub der durch Abbau und anschließende Vermahlung von bereits benutzten Feuerleichtbausteinen oder aufgrund Vermahlung von der erwähnten Feuerleichtsteinausschußware entstanden ist, wird gesammelt und anschließend mit einem an sich bekannten Bindemittel wie beispielsweise Wasserglas oder Natronwasserglas vermischt. Wahlweise kann bereits vor der Vermischung des Schleifstaubes/Mahlstaubes mit dem Bindemittel der Schleifstaub/Mahlstaub mit Mikroholkugeln vermischt werden oder aber die Mikroholkugeln während der Vermischung des Schleifstaubs/Mahlstaubs mit dem flüssigen Bindemittel der dabei entstehenden Paste zugemischt werden. Als optimaler Schleifstaub/Mahlstaub hat sich Schleifstaub/Mahlstaub mit Korngrößen bis zu 2mm erwiesen, wobei jedoch auch Schleifstaub/Mahlstaub mit Korngrößen bis zu 5 mm zum Einsatz kommen können. Beim Einsatz von Schleifstaub/Mahlstaub mit Korngrößen bis zu 2mm entsteht jedoch mittels des erfindungsgemäßen Verfahren nach dem Pressen ein neuer Feuerleichtstein mit optimalen Festigkeitseigenschaften. Beim Einsatz von Natronwasserglas als Bindemittel hat sich ein Verhältnis von Schleifstaub/Mahlstaub zu Bindemittel von 10:1 als optimal erwiesen. Nach dem Vermischen von Schleifstaub/Mahlstaub und Bindemittel erfolgt das Formpressen in hydraulischen Formpressen. Die so hergestellten Feuerleichtsteine werden anschließend ca. 24 Stunden lang bei einer Temperatur zwischen 85°C und 135°C , vorzugsweise zwischen 95°C und 120°C in einem Durchlauftrockner bzw. Temperofen getrocknet und anschließend versandt. Der Durchlauftrockner bzw. Temperofen muss für den Trocknungsvorgang nicht notwendigerweise langsam aufgeheizt werden, wie das bei nach dem Stand der Technik bekannten Verfahren erforderlich ist, wo der Durchlauftrockner bzw. Temperofen entlang sogenannter Trocknungskurven hochgefahren werden muss. Vielmehr erlaubt es die Verwendung von bei der Herstellung von Feuerleichtsteinen mittels Schleifen, anfallender Schleifstaub oder beim Vermahlen von bereits benutzten Feuerleichtsteinen oder Ausschussware entstandenem Mahlstaub als Ausgangsmaterial, auch eine Schockerhitzung der fertig gepressten Feuerleichtsteine vorzunehmen, dh. mit dem fertig gepressten Feuerleichtstein einen Durchlauftrockner bzw. Temperofen zu beschicken, der bereits auf ca. 100°C vorgeheizt ist.

### Ausführungsbeispiel 2

Als Schleifstaub/Mahlstaub kommt Schleifstaub/Mahlstaub mit Korngrößen von 2 bis 5mm zum Einsatz, der mit Mikroholkugeln mit einem Durchmesser von 0-0,5mm vermischt wird. Beim Einsatz von zusätzliche Mikroholkugeln ist die Verwendung von einer größeren Menge an Bindemittel erforderlich, so dass das Gewichtsverhältnis von Schleifstaub/Mahlstaub samt Mikroholkugeln zu Bindemittel ca. 10:2,2 beträgt, wobei das Gewichtsverhältnis von Schleifstaub/Mahlstaub zu Mikroholkugeln ca. 10:1 beträgt. Sämtliche anderen Verfahrensparameter sind identisch zu jenen aus Ausführungsbeispiel 1.

In beiden Ausführungsbeispielen kommt eine hydraulische 2000t Formpresse mit einem Druck von 64 bar zum Einsatz. Damit wurden Normalsteine NF2 (250mm x 124mm x 64 mm) hergestellt. Andere Pressparameter sind ebenfalls getestet worden und haben zur Herstellung von voll funktionsfähigen Feuerleichtsteinen geführt.

In beiden Ausführungsbeispielen weisen die so hergestellten Feuerleichtsteine eine Klassifikationstemperatur von 1300°C auf. Für den Fall, dass eine höhere Klassifikationstemperatur erreicht werden soll, wäre Wasserglas als Bindemittel durch Aluminiumphosphat oder kolloide Kieselsäure zu ersetzten und der Trocknungsvorgang durch einen Brennvorgang von gleicher Dauer jedoch zwischen 500°C und 600°C.

## Patentansprüche

1. Verfahren zum Herstellen feuerfester Feuerleichtsteine, **dadurch gekennzeichnet, dass** als Ausgangsprodukt entweder bei der Herstellung von Feuerleichtsteinen mittels Schleifen, anfallender Schleifstaub oder beim Vermahlen von bereits benutzten Feuerleichtsteinen oder von Feuerleichtsteinausschußware entstandener Mahlstaub zum Einsatz kommt, das mit einem an sich bekanntem Bindemittel vermischt wird, anschließend in einer Formpresse gepresst und danach einem Trocknungsvorgang oder einem Brennvorgang bei einer Temperatur höher als 85°C ausgesetzt wird.

2. Verfahren nach Anspruch 1, **dadurch gekennzeichnet, dass** der Schleifstaub/Mahlstaub 30-77 Gew% Al₂O₃, 21-65 Gew% SiO₂, 0,7-2,05% Fe₂O₃ sowie Zusatzstoffe enthält.

3. Verfahren nach Anspruch 2, **dadurch gekennzeichnet, dass** die Zusatzstoffe 0,36-0,82 Gew% TiO₂, 0,06-0,24 Gew% CaO, 0,05-0,53 MgO, 0,13-0,33 Gew% Na₂O, 0,34-3,01 Gew% K₂O und 0,02-02 Gew% P₂O₅ umfassen.

4. Verfahren nach einem der Ansprüche 1 bis 3, **dadurch gekennzeichnet, dass** das Bindemittel Wasserglas ist und der Verfahrensabschnitt des Trocknens für eine Dauer zwischen 22 und 26, vorzugsweise von 24 Stunden bei einer Temperatur zwischen 85°C und 135°C , vorzugsweise zwischen 95°C und 120°C durchgeführt wird.

5. Verfahren nach einem der Ansprüche 1 bis 3, **dadurch gekennzeichnet, dass** das Bindemittel Aluminiumphosphat (AlPO₄), vorzugsweise Monoaluminiumphosphat ist und der Verfahrensabschnitt des Brennens für eine Dauer zwischen 22 und 26, vorzugsweise von 24 Stunden bei einer Temperatur zwischen 500°C und 600°C durchgeführt wird.

6. Verfahren nach einem der Ansprüche 1 bis 3, **dadurch gekennzeichnet, dass** das Bindemittel eine wässrige Lösung kolloider Kieselsäure (H₂SiO₃) ist und der Verfahrensabschnitt des Brennens für eine Dauer zwischen 22 und 26, vorzugsweise von 24 Stunden bei einer Temperatur zwischen 500°C und 600°C durchgeführt wird.

7. Verfahren nach einem der Ansprüche 1 bis 6, **dadurch gekennzeichnet, dass** das Pressen mittels hydraulischer Formpressen erfolgt.

8. Verfahren nach einem der Ansprüche 1 bis 7, **dadurch gekennzeichnet, dass** dem Schleifstaub/Mahlstaub vor oder während des Vermischens mit dem Bindemittel Mikroholkugeln zugesetzt werden.

9. Verfahren nach einem der Ansprüche 1 bis 8, **dadurch gekennzeichnet, dass** die durchschnittliche Partikelgröße des Schleifstaubs bzw. Mahlstaubs höchstens 2mm beträgt.

10. Feuerfester Feuerleichtstein hergestellt nach einem Verfahren nach einem der Ansprüche 1 bis 8.

## Claims

1. A method for producing refractory-grade light-weight refractory bricks, **characterized in that** either grinding dust obtained by grinding in the production of light-weight refractory bricks or milling dust obtained during the milling of already used light-weight refractory bricks or rejected material made of light-weight refractory bricks is used as a starting product, which product is mixed with a known binding agent, thereafter pressed in a moulding press and is thereafter subjected to a drying process or a burning process at a temperature of more than 85°C.

2. A method according to claim 1, **characterized in that** the grinding dust/milling dust contains 30 to 77% by weight of Al₂O_{3,} 21 to 65% by weight of SiO_{2,} 0.7 to 2.05% of Fe₂O₃ and additives.

3. A method according to claim 2, **characterized in that** the additives comprise 0.36 to 0.82% by weight of TiO₂, 0.06 to 0.24% by weight of CaO, 0.05 to 0.53 MgO, 0.13 to 0.33% by weight of Na₂O, 0.34 to 3.01% by weight of K₂O and 0.02 to 02% by weight of P₂O_{5.}

4. A method according to one of the claims 1 to 3, **characterized in that** the binding agent is water glass and the method step of drying is carried out for a duration of between 22 and 26 hours, preferably 24 hours, at a temperature of between 85°C and 135°C, preferably between 95°C and 120°C.

5. A method according to one of the claims 1 to 3, **characterized in that** the binding agent is aluminium phosphate (AlPO₄), preferably monoaluminium phosphate, and the method step of burning is carried out for a duration of between 22 and 26 hours, preferably 24 hours, at a temperature of between 500°C and 600°C.

6. A method according to one of the claims 1 to 3, **characterized in that** the binding agent is an aqueous solution of colloidal silicic acid (H₂SiO₃) and the method step of burning is carried out for a duration of between 22 and 26 hours, preferably 24 hours, at a temperature of between 500°C and 600°C.

7. A method according to one of the claims 1 to 6, **characterized in that** the pressing occurs by means of hydraulic moulding presses.

8. A method according to one of the claims 1 to 7, **characterized in that** micro hollow spheres are added to the grinding dust/milling dust prior to or during the mixing with the binding agent.

9. A method according to one of the claims 1 to 8, **characterized in that** the average particle size of the grinding dust or milling dust is not more than 2 mm.

10. A refractory-grade light-weight refractory brick, produced according to a method according to one of the claims 1 to 8.

## Revendications

1. Procédé pour la fabrication de briques légères réfractaires résistantes au feu, **caractérisé en ce que** la matière première est soit une poussière de meulage produite lors de la fabrication de briques légères réfractaires au moyen d'un meulage, soit de la poussière de concassage produite lors du concassage de briques légères réfractaires ou de rebuts de briques légères réfractaires, qui est mélangée à un liant connu en soi, pressée dans une presse de moulage puis exposée à un processus de séchage ou de cuisson à une température supérieure à 85°C.

2. Procédé selon la revendication 1, **caractérisé en ce que** la poussière de meulage ou de concassage contient 30 à 77 % en poids d'Al₂O_{3,} 21-65 % en poids de SiO₂, 0,7- 2,05% de Fe₂O₃ ainsi que des additifs.

3. Procédé selon la revendication 2, **caractérisé en ce que** les additifs comprennent 0,36-0,82 % en poids de TiO_{2,} 0,06-0,24 % en poids de CaO, 0,05-0,53 de MgO, 0,13-0,33 % en poids de Na₂O, 0,34-3,01 % en poids de K₂O et 0,02-02 % en poids de P₂O₅.

4. Procédé selon l'une des revendications 1 à 3, **caractérisé en ce que** le liant est du verre soluble et l'étape de séchage est exécutée pendant une durée de 22 à 26 heures, de préférence de 24 heures, à une température comprise entre 85°C et 135°C, de préférence entre 95°C et 120°C.

5. Procédé selon l'une des revendications 1 à 3, **caractérisé en ce que** le liant est du phosphate d'aluminium (AlPO₄), de préférence du monophosphate d'aluminium, et l'étape de cuisson est exécutée pendant une durée de 22 à 26 heures, de préférence de 24 heures, à une température comprise entre 500°C et 600°C.

6. Procédé selon l'une des revendications 1 à 3, **caractérisé en ce que** le liant est une solution aqueuse d'acide silicique colloïdal (H₂SiO₃) et l'étape de cuisson est exécutée pendant une durée de 22 à 26 heures, de préférence de 24 heures, à une température comprise entre 500°C et 600°C.

7. Procédé selon l'une des revendications 1 à 6, **caractérisé en ce que** le pressage est réalisé au moyen d'un moulage à la presse hydraulique.

8. Procédé selon l'une des revendications 1 à 7, **caractérisé en ce que** la poussière de meulage ou de concassage est additionnée de microbilles creuses avant ou pendant le mélange avec le liant.

9. Procédé selon l'une des revendications 1 à 8, **caractérisé en ce que** la taille de particules moyenne de la poussière de meulage ou de concassage est au maximum de 2 mm.

10. Brique réfractaire légère résistante au feu fabriquée par un procédé selon l'une des revendications 1 à 8.
